(19) Europäisches Patentamt / European Patent Office / Office européen des brevets

(11) **EP 3 299 521 B1**

(12) **EUROPEAN PATENT SPECIFICATION**

(45) Date of publication and mention of the grant of the patent:
**11.01.2023 Bulletin 2023/02**

(21) Application number: **16796773.6**

(22) Date of filing: **18.05.2016**

(51) International Patent Classification (IPC):
**E02B 9/00** *(2006.01)*    **E02B 9/02** *(2006.01)*

(52) Cooperative Patent Classification (CPC):
**E02B 9/08; E02B 9/02; F03B 13/268;** Y02E 10/30

(86) International application number:
**PCT/KR2016/005260**

(87) International publication number:
**WO 2016/186446 (24.11.2016 Gazette 2016/47)**

(54) **TIDAL POWER GENERATION SYSTEM CAPABLE OF MULTIPLE-FLOW POWER GENERATION FROM INSTALLATION OF UNIFLOW GENERATOR**

GEZEITENKRAFTWERK MIT MEHRFLUSSENERGIEERZEUGUNG AUS DER INSTALLATION EINES EINFLUSSGENERATORS

SYSTÈME DE GÉNÉRATION D'ÉNERGIE MARÉMOTRICE POUVANT GÉNÉRER DE L'ÉNERGIE À FLUX MULTIPLES À PARTIR D'INSTALLATION DE GÉNÉRATEUR DE FLUX UNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2015 KR 20150070188**
**16.05.2016 KR 20160059359**

(43) Date of publication of application:
**28.03.2018 Bulletin 2018/13**

(73) Proprietor: **Hae Yang Boklubaljern, LP**
**Wonju-si, Gangwon-do 26324 (KR)**

(72) Inventor: **PARK, Sun Seok**
**Wonju-si, Gangwon-do 26324 (KR)**

(74) Representative: **Scheele, Friedrich et al**
**Scheele Wetzel Patentanwälte**
**Bayerstraße 83**
**80335 München (DE)**

(56) References cited:
**JP-A- H10 115 279      KR-A- 20040 066 989**
**KR-A- 20120 021 348    KR-B1- 100 723 639**
**KR-B1- 101 073 462**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 3 299 521 B1**

**Description**

Technical Field

The present invention relates to a tidal power generation system, and more particularly, to a tidal power generation system capable of multiple-flow power generation from an installation of a uniflow generator, in which auxiliary waterways are installed at both sides of a hydraulic turbine waterway in which the uniflow generator is installed, respectively, such that water is introduced into one side auxiliary waterway so as to generate power, and the other side auxiliary waterway is connected to an existing drain waterway so that the water used to generate power may be drained, thereby enabling the multiple-flow power generation only by opening and closing a required sluice gate.

Background

General power generation methods include hydroelectric power generation, thermal power generation, nuclear power generation, tidal power generation, and the like. Among the power generation methods, the tidal power generation generates electric power by constructing a dam at an inflow side of tidewater, installing a hydraulic turbine, and operating an generator by using rotational force of the hydraulic turbine when the hydraulic turbine is rotated by a head drop of the tidewater when a sea level is gradually increased from the ebb tide to the high tide and thus the tidewater horizontally flows to the coast. Because the tidewater always and uniformly flows horizontally as long as the earth and the moon are present, various researches are being conducted on the tidal power generation.

That is, the tidal power generation is carried out by constructing a buried type dam having a waterway for power generation at an inlet where sea water flows toward a lake.

A waterway and a sluice gate of the buried type dam in the related art cannot fill the dam with water and completely drain the water to a minimum water level within one hour after power generation for at least four to five hours, such that normal multiple-flow power generation cannot be carried out even though a multiple-flow generator is installed to carry out the multiple-flow power generation. In addition, there are various problems in that environmental damage such as a reduction in mudflats and deterioration of water quality occurs, fishermen are uprooted from their home due to the reduction in mudflats, and waterway areas are insufficient.

That is, uniflow power generation and multiple-flow power generation may be carried out as the tidal power generation, and up to now, the multiple-flow power generation has problems in that a purchase price of a multiple-flow generator is higher, by 50% or more, than that of a uniflow generator, installation costs are increased because the same structure of a drain waterway is installed at the inland sea and the open sea, and the multiple-flow power generation is carried out by a reverse rotation.

In addition, the buried type dam in the related art has a problem in that a large amount of construction and installation costs is required because a waterway passing through a reclaimed land is installed for an inflow and an outflow of water that flows into or out of a hydraulic turbine in a generator room, the waterway is buried with soil, road pavement is carried out, and a supply and drainage waterway is separately installed.

Further, in the installation of the existing generator, there is a problem in that economic feasibility deteriorates because only about 30% to 40% of stored water is utilized and the remaining 70% to 80% of water is drained in order to increase power generation efficiency for each generator.

Further, the present invention relates to a sluice gate. For example, in a case in which the existing sluice gate has a sluice gate width of 20 m and a height of 15 m, there are problems in that the sluice gate has a heavy weight, a large amount of time is required to open and close the sluice gate, and as a result, the time required to treat water, which remains after power generation and less accommodated, is shortened.

Further, there is a problem in that a large amount of construction costs is required because an installation length of the generator room is increased at a place where a water depth is shallow.

A prior art system is provided in Korean Patent Application Laid-Open No. 10-2010-0004089 (January 12, 2010), disclosing a a method for constructing a tidal power generator. Furthermore KR 10-0723639 B1 (June 4, 2007) discloses a construction method for a tidal power generation system capable of multiple-flow power generation from an installation of a uniflow generator, the construction method comprising a hydraulic turbine waterway which has therein a generator and a hydraulic turbine, and is formed by forming hydraulic turbine waterway wall bodies at both sides thereof; auxiliary waterways which are formed by forming auxiliary waterway wall bodies at both sides of the hydraulic turbine waterway wall bodies so as to be spaced apart from the waterway wall bodies, and connected to the hydraulic turbine waterway so that water flows therebetween, and a plurality of sluice gates which have one end and the other end at which three waterways, which include a single hydraulic turbine waterway and two auxiliary waterways are provided, and is opened and closed to introduce and drain water for rectification and multiple-flow power generation.

## Summary

**Technical Problem**

The present invention has been made in an effort to solve the aforementioned problems, and an object of the present invention is to provide a construction method for a tidal power generation system capable of multiple-flow power generation from an installation of a uniflow generator, in which auxiliary waterways are installed at both sides of a hydraulic turbine waterway in which the uniflow generator is installed, respectively, such that water is introduced into one side auxiliary waterway so as to generate power in the same manner as the existing power generation direction, and the other side auxiliary waterway is connected to the existing drain waterway so that the water used to generate power may be drained, thereby enabling the multiple-flow power generation only by opening and closing a required sluice gate, and thus achieving convenience for use and a reduction in economic costs.

Regarding the present invention, a waterway and a sluice gate cannot fill the dam with water and completely drain the water to a minimum water level within one hour after power generation for at least 4.5 hours, such that normal multiple-flow power generation cannot be carried out even though a multiple-flow generator is installed to carry out the multiple-flow power generation. In addition, another object of the present invention is to provide a construction method for a tidal power generation system for solving various problems in that environmental damage such as a reduction in mudflats and deterioration of water quality occurs, fishermen are uprooted from their home due to the reduction in mudflats, and waterway areas are insufficient.

Still another object of the present invention is to provide a construction method for a tidal power generation system for solving problems of the multiple-flow power generation in that uniflow power generation and multiple-flow power generation may be carried out as the tidal power generation up to now, and thus, a purchase price of a multiple-flow generator is higher, by 50% or more, than that of a uniflow generator, installation costs are increased because the same structure of a drain waterway is installed at the inland sea and the open sea, and the multiple-flow power generation is carried out by a reverse rotation.

Yet another object of the present invention is to provide a construction method for a tidal power generation system for solving a problem in the installation of the existing generator in that economic feasibility deteriorates because only about 30% to 40% of stored water is utilized and the remaining 70% to 80% of water is drained in order to increase power generation efficiency for each generator.

Still yet another object of the present invention is to provide a construction method for a tidal power generation system capable of multiple-flow power generation from an installation of a uniflow generator, in which for example, the existing waterway, which has a width of 20 m and a waterway height of 15 m so as to have an area of 300 $m^2$, is equally divided into three waterways which have a waterway width of 20 m and a waterway height of 5 m $\times$ 3 stages so as to have an area 300 $m^2$, and a 3-stage steplike sluice gate is retractably installed by dividing a sluice gate into three pieces having by 5 m in order to decrease the time required to open and close the sluice gate, and as a result, it is possible to decrease a weight and a height of the sluice gate by 1/3, thereby increasing an opening and closing speed.

A further object of the present invention is to provide a construction method for a tidal power generation system capable of multiple-flow power generation from an installation of a uniflow generator, in which construction costs may be reduced because a crane installation height of a switch is decreased to 5 m, a height of a bridge is also decreased by 10 m from 15 m to 5 m, an installation length of a generator room may be decreased because in a case in which a waterway, which has a waterway width of 20 m and a waterway height of 5m $\times$ 3 stages so as to have a waterway area of 300 $m^2$, is installed below a hydraulic turbine waterway, that is, as a lower layer of the hydraulic turbine waterway at a place where water is deep or the ground can be dug deeply because of the weak ground, a waterway area is not decreased without an auxiliary waterway 102b which includes sluice gates 32 and 33 of the auxiliary waterway and has a width of 20 m and a height of 15 m so as to have a waterway area of 300 $m^2$, and a waterway 102a, which includes sluice gates 22 and 23 of an auxiliary waterway and has a width of 20 m and a height of 15 m so as to have a waterway area of 300$m^2$, becomes a waterway, which has a width of 10 m $\times$ 5m $\times$ 3 stages so as to have a waterway area of 150 $m^2$ and a waterway, which includes sluice gates 22-1 and 23-1 of an auxiliary waterway as a lower layer and has a width of 10 m and a waterway height of 5 m $\times$ 3 stages so as to have a waterway area of 150 $m^2$ so as to have a waterway area of 300 $m^2$, that is, becomes a waterway which has a width of 10 m and a height of 5 m $\times$ steplike waterway 6 stages so as to have a waterway area 300$m^2$, such that the waterway area is equally 300 $m^2$ and the waterway width is decreased to 10 m, and as a result, an installation length of the generator room for each generator may be decreased by a total of 30 m including a waterway width of 10 m of the auxiliary waterway 102a and a waterway width of 20 m of the auxiliary waterway 102b, and for example, in a case in which twenty-five generators are installed, it is possible to decreased an installation length of the generator room by 750 m (25 $\times$ installation length of 30 m), thereby significantly reducing construction costs.

Up to now, the multiple-flow power generation cannot be normally carried out because the generators are less installed in order to increase efficiency for each generator, and as a result, after power generation, the amount of remaining and less accommodated water is of course increased, and time required to naturally treat water is increased. ② When a supply and drainage waterway is installed to have a small area and power generation is carried out for 4.5 hours, remaining and less accommodated water needs to be completely drained naturally and fully accommodated naturally for one hour including time of stand of tide in order to carry out the normal multiple-flow power generation, perfectly prevent damage to mudflats, minimize damage to fishermen, and perfectly prevent deterioration of water quality. Another further object of the present invention is to provide a construction method for a tidal power generation system capable of normal multiple-flow power generation, because in the case of the tidal power generation up to now, the number of installed generators is insufficient and ② an installation area of the supply and drainage waterway is insufficient, which causes damage to mudflats and deterioration of water quality, causes fishermen to be uprooted from their home, and inhibits normal multiple-flow power generation.

Technical Solution

To achieve the aforementioned objects, a Multiple-flow tidal power generation system according to an exemplary embodiment of the present invention includes: a hydraulic turbine waterway which has therein a generator and a hydraulic turbine, and is formed by forming hydraulic turbine waterway wall bodies at both sides thereof; auxiliary waterways which are formed by forming auxiliary waterway wall bodies at both sides of the hydraulic turbine waterway wall bodies so as to be spaced apart from the waterway wall bodies, and connected to the hydraulic turbine waterway so that water flows therebetween; and a plurality of sluice gates which is provided at one end and the other end of the hydraulic turbine waterway and the auxiliary waterways, and is opened and closed to introduce and drain water for rectification and multiple-flow power generation, wherein the hydraulic turbine waterway and the auxiliary waterway are vertically installed, the hydraulic turbine waterway and the auxiliary waterway vertically communicate with each other, the three waterways, which include the single hydraulic turbine waterway and the two auxiliary waterways, are installed for each generator, and each auxiliary waterway separately includes a supply and drainage waterway function.

The present invention is a waterway installation standard as a key technology for solving the problem in that because of insufficiency of a waterway area which has been a greatest obstructive factor against tidal power generation up to now, a reduction in mudflats and damage to fishermen occur, water quality deteriorates, and normal multiple-flow power generation cannot be carried out.

According to the installation standard, three waterways, which include a single hydraulic turbine waterway and two supply and drainage waterways serving as auxiliary waterways, are installed for installing a single generator based on the same dimension as the hydraulic turbine waterway. A supply and drainage waterway area, which may naturally and completely treat remaining and less accommodated water after power generation, is sufficient even though a separate supply and drainage waterway is not installed.

For example, in a case in which twenty-eight generators are installed, eighty-four waterways, which include twenty-eight hydraulic turbine waterways and fifty-six supply and drainage waterways serving as auxiliary waterways, are installed and may naturally treat remaining and less accommodated water for about twenty-two minutes after power generation, and as a result, there is no reduction in mudflats, no damage to fishermen, and no deterioration of water quality, and normal multiple-flow power generation may be carried out.

A separate supply and drainage waterway passing through the existing reclaimed land is not installed, but the three waterways, which include the single hydraulic turbine waterway and the two supply and drainage waterways serving as auxiliary waterways, are installed for installing the single generator. That is, in the installation of the generator, the waterway area is automatically and sufficiently installed when 80% of water at a height in a maximum tidal range is used to generate power and a height of remaining water is 1.8 m.

Another exemplary embodiment of the present invention is a key technology regarding the number of installed generators, that is, a standard regarding the number of installed generators which is secondarily important to the tidal power generation. In a case in which too many generators are installed, construction costs are wasted, and power generation cannot be efficiently carried out. In a case in which few generators are installed like the present, a large amount of remaining and less accommodated water is present after power generation, and if the remaining water is not completely drained, mudflats disappear as much as the amount of water that is not drained yet such that fishermen are uprooted from their home, and water is not smoothly circulated such that water quality deteriorates. In a case in which a height of water, which is not drained yet, is 3 m, a head drop is 0 m even though a water level is increased to 3 m, but because the head drop needs to be 1.8 m or higher in order to perform the subsequent multiple-flow power generation, the water level needs to be 5 m so that the head drop becomes 2 m and power generation begins to be carried out, and as a result, abnormal multiple-flow power generation is inevitably carried out because the multiple-flow power generation cannot be carried out with water having a height of 3 m. However, the present invention is a key technology for solving the many problems, and the number of generators is set to carry out power generation so that 80% of water, which has a height of 9 m in a maximum tidal range, is used to generate power for 4.5 hours and a height of 20% of remaining and less accommodated water is 1.8 m.

The normal multiple-flow power generation may refer to normal multiple-flow power generation in which power generation is carried out immediately when the water begins to be supplied and the head drop becomes 1.8 m or higher from a state in which the remaining and less accommodated water is completely treated like the natural state and thus has the same water height as the open sea or the inland sea, and power generation is carried out immediately when the water is drained to 1.8 m or higher from a state in which the water is fully accommodated like the natural state and thus has the same water height as the inland sea or the open sea. Abnormal multiple-flow power generation refers to a situation in which power generation cannot be carried out with water having a water height of 3 m and the water height needs to be 5 m or higher in order to carry out power generation as described above.

A method, which may use 80% of water to generate power and may naturally treat remaining and less accommodated water within about 22 minutes like the following calculation that may use 80% of water in a maximum tidal range and may naturally treat 20% of remaining and less accommodated water within 22 minutes, is a method capable of perfectly preventing damage to mudflats and deterioration of water quality, minimizing damage to fishermen, producing electric power four or more times with the normal multiple-flow power generation, and thus solving all negative effects on activation of the tidal power generation industry.

For example, the Gangwha tidal power station uses 40% of water by using fourteen uniflow generators and six supply and drainage waterways in the related art in a state in which a water storage area is 36.9 km$^2$, and a height in a tidal range is 9 m.

The fourteen uniflow generators and the six supply and drainage waterways use 40% of water in the related art, but in the developed method, twenty-eight generators and eighty-four waterways, which include twenty-eight hydraulic turbine waterways and fifty-six supply and drainage waterways serving as auxiliary waterways are installed and use 80% of water and 20% of water remains and is less accommodated, and the water is treated by the fifty-six waterways having a waterway width of 20 m and a height of 15 m.

Amount of remaining water of 1.8 m: water storage area 36,900,000 m$^2$ × height of 1.8 m of remaining water = amount of remaining water 66,420,000 t

Here, a flow velocity of naturally falling water having a water height of 1.8 m is calculated by $9.8 \times 2 \times 1 \times 1.8$ m = $\sqrt{35.28} = 5.939$ m/s , and because a flow velocity is decreased as water is drained, an average flow velocity, which is a half value, is calculated to 2.9698 m.

Here, because the average flow velocity is $9.8 \times 2 \times 1 \times 0.45$ m = $\sqrt{8.82}$ = 2.9698 m, an average water height when water is drained is 0.45 m when applying the average flow velocity.

When calculating the amount of water which may be drained and accommodated for one minute, the amount of water, which may be treated for one minute, is 20 m (waterway width) × 15 m (waterway height) × 56 (number of waterways) × 2.9698 m/s (average flow velocity) × 60 seconds = 2,993,558 t, such that the amount of water, which may be treated for one minute, is calculated. Here, a water storage amount is 66,420,000 t ÷ 2,993,558 t = 22.187 when a height of remaining water is 1.8 m, such that water may be naturally and completely drained and fully accommodated, and there is some time of thirty-eight minutes when remaining and less accommodated water is drained and accommodated after power generation (the water, which is drained to the twenty-eight hydraulic turbine waterways, is not calculated), and as a result, the water may be naturally and sufficiently treated for one hour. In a case in which rating power generation cannot be actually carried out and a large amount of water remains even though the number of generators is set by calculating the amount of water for enabling rating power generation, and in a case in which a water height of the remaining water is 1.8 m or higher even though power generation is carried out by extending power generation time by thirty-eight minutes, two generators are further installed for example, and power generation is carried out, such that the amount of remaining water is decreased, and since the number of supply and drainage waterways serving as auxiliary waterways 102a and 102b is increased to four, the water may be naturally and sufficiently treated, and as a result, it is possible to perfectly prevent damage to mudflats and deterioration of water quality, minimize damage to fishermen, and enables normal multiple-flow power generation. In a case in which rating power generation cannot be actually carried out and a large amount of water remains even though the number of generators is set by calculating water for enabling rating power generation, and in a case in which a water height of remaining water is 1.8 m or higher and a large amount of water remains due to an insufficiency of a waterway area even though power generation is carried out by extending power generation time to thirty-eight 38 minutes, the waterway is not further installed, and the number of installed generators needs to be decreased in a case in which about thirty-eight minutes remains when water is naturally treated within 22.187 minutes in contrast to the case in which the generator is further installed.

The present invention is a technology of increasing a speed of a sluice gate when the time required to open and close the sluice gate is too long. For example, the existing waterway, which has a width of 20 m and a waterway height of 15 m so as to have an area of 300 m$^2$, is equally divided into three waterways which have a width of 20 m and a waterway height of 5 m × 3 stages so as to have an area of 300 m$^2$, and a 3-stage steplike sluice gate is retractably installed by dividing the sluice gate into three pieces by 5 m in order to decrease a weight and a height of the sluice gate by 1/3 even though a total of areas of the 3-stage sluice gate is equal to the area of the existing water way. Therefore, the speed of opening and closing the sluice gate may be structurally calculated to be increased three to five times. For example, the speed of the sluice gate is 1 m per one minute such that a height of the sluice gate is adjusted to 15 m for fifteen minutes, and adjusted to 14 m for one minute for final 1 m in the related art, but the sluice gate is opened and closed within one to two minutes by an electronic control device, and as a result, multiple-flow power generation may be carried out from an installation of a uniflow generator.

The present invention relates to multiple-flow power generation, intellectuals in Korea, who are interested in tidal power generation, misunderstand that normal multiple-flow power generation cannot be carried out due to a small height in a tidal range, but the situation is different from the truth. The multiple-flow power generation cannot be normally carried out up to now, but when a supply and drainage waterway is installed to have a small area and power generation is carried out for 4.5 hours, remaining and less accommodated water needs to be completely drained naturally and fully accommodated naturally for one hour including time of stand of tide in order to carry out the normal multiple-flow power generation, perfectly prevent damage to mudflats, minimize damage to fishermen, and perfectly prevent deterioration of water quality. ② The generators are less installed in order to increase efficiency for each generator, and as a result, after power generation, the amount of remaining and less accommodated water is of course increased, and time required to naturally treat water is increased, and as a result, the water cannot be naturally treated, and normal multiple-flow power generation cannot be carried out.

To solve the two causes, in the present invention, when installing a single generator, three waterways, which include a single hydraulic turbine waterway and two supply and drainage waterways serving as auxiliary waterways, are installed. A supply and drainage waterway area is sufficient even though a separate supply and drainage waterway is not installed, and remaining and less accommodated water may be naturally and completely treated within about twenty-two minutes after power generation, thereby solving all problems caused by a multiple-flow generator having many problems and insufficiency of a waterway area. According to the number of installed generators in the related art, only 30% to 40% of water in a maximum tidal range is used to generate power and 60% to 70% of water is drained, but in the present invention, the number of generators is set to use 80% of water when a height in a maximum tidal range is 9 m in order to generate power and drain 20% of water having a height of 1.8 m. In the case of tidal power generation at the Sihwa lake in Korea, power generation may be carried out when a head drop enabling power generation is 1.8 m or higher and power generation is stopped when a head drop is 1.8 m or lower because the power generation cannot be carried out, and when a height in a tidal range is 1.8 m or higher, normal multiple-flow power generation may be carried out regardless of time and place. That is, it is wrong that normal multiple-flow power generation cannot be carried out in Korea because of a small tidal range, and normal multiple-flow power generation may be carried out anywhere as long as a height in a tidal range is 1.8 m or higher and remaining and less accommodated water may be naturally and completely drained and fully accommodated within one hour after power generation.

Technologies and Markets at Home and Abroad

| Classification | Unit | Sihwa Tidal Power Station | Ranee | Annapolis | Jiang Xia | Kislaya Guba |
|---|---|---|---|---|---|---|
| Maximum Tidal Range | M | 9.0 | 13.5 | 8.7 | 8.4 | 3.9 |
| Facility Capacity | MW | 25.4 | 24.0 | 20.0 | 3.2 | 0.4 |
| Year of Completion | year | 2011 | 1966 | 1984 | 1980-1985 | 1966 |
| Annual Power Production | mWh | 552,000 | 544,00 0 | 50,000 | 6,000 | 1,200 |
| Power Generation Type | | Uniflow Type | Multipl e-Flow Type | Uniflow Type | Multiple-Flow Type | Uniflow Type |
| Management Country | | Korea | France | Canada | China | Russia |

As an example, the Rance tidal power station in France is just equipped with multiple-flow generators but cannot carry out normal multiple-flow power generation even though a height in a tidal range is 13 m or higher, and there are the aforementioned two reasons. It can be seen from an example of the Ranee tidal power station that in a case in which a head drop reaches a state in which power generation cannot be carried out from a state in which tidal power generation is carried out up to now, power generation is carried out when all of the sluice gates are opened and a water level of the open sea is equal to a water level of the inland sea, that is, when the sluice gates are closed in a state in which remaining and less accommodated water is not naturally treated and a head drop for enabling power generation occurs, an effect of multiple-flow power generation is extremely low even though a height in a tidal range is 20 m or higher. The Ranee tidal power station is equipped with twenty-four 10 MW grade multiple-flow generators such that power production is 240 MW and annual power production is 544,000 mWh which are almost equal to those of the Sihwa tidal power station which is equipped with ten 25.4 MW grade multiple-flow generators such that power production is 254 MW and annual power production is 552,000 mWh. In the case of the Sihwa tidal power station, power generation is carried out by restricting a water height of water, which is used to generate power through uniflow power generation, to 3.6 m due to a problem of water flooding at the periphery of a dam, such that the power generation is rather poorer than the uniflow power generation. In a case in which remaining and less accommodated water, which is used for multiple-flow power generation from an installation of a uniflow generator in which a multiple-flow generator is installed, cannot be naturally treated, normal multiple-flow power generation cannot be absolutely carried out, such that mudflats are damaged, water quality deteriorates, and fishermen are inevitably uprooted from their home, and as a result, the tidal power generation industry cannot be activated. However, because all of the problems are completely solved by the present invention, the tidal power generation industry will be activated with an easy mind.

A water storage amount 66,420,000 t ÷ 2,993,558 t = 22.187 min. when a height of remaining water is 1.8 m, such that water may be naturally and completely drained and fully accommodated, and there is some time of thirty-eight minutes when remaining and less accommodated water is drained and accommodated after power generation, and as a result, the water may be naturally and sufficiently treated for one hour. In a case in which rating power generation cannot be actually carried out and a large amount of water remains even though the number of generators is set by calculating the amount of water for enabling rating power generation, and in a case in which a water height of the remaining water is 1.8 m or higher even though power generation is carried out by extending power generation time by thirty-eight minutes, two generators are further installed for example, and power generation is carried out, such that the amount of remaining water is decreased, and since the number of supply and drainage waterways serving as auxiliary waterways 102a and 102b is increased to four, the water may be naturally and sufficiently treated, and as a result, it is possible to perfectly prevent damage to mudflats and deterioration of water quality, minimize damage to fishermen, and enables normal multiple-flow power generation. The number of generators may be adjusted to be increased or decreased so as to solve all of the problems that hinder tidal power generation.

**Advantageous Effects**

There are the following effects according to the technical solution.

First, the multiple-flow generator of which the purchase price is higher by 50% or more than the uniflow generator is not used, and only the uniflow generator is installed, and as a result, the multiple-flow power generation is normally carried out, and there are a lot of economic effects.

Second, there is difficulty in the related art because power generation needs to be carried out by changing a direction of a blade (fan) of a hydraulic turbine and reversely rotating the blade in order to carry out multiple-flow power generation after power generation, and there is a problem caused by a reverse rotation. However, in the present invention, only the uniflow generator is installed, water at the opposite side is introduced through the auxiliary waterways, and power generation is carried out, such that there is an effect identical to an effect occurring when a single uniflow generator is installed in a single hydraulic turbine waterway and two auxiliary waterways are installed at both sides of the single hydraulic turbine waterway one for each side, and as a result, the present invention is economic, and there is no reverse rotation such that there is no problem caused by the reverse rotation, and it is convenient to use the tidal power generation system because multiple-flow power generation may be carried out only by opening and closing the required sluice gate.

Third, in the case of the tidal power generation system in the related art, a waterway passing through a reclaimed land is installed for an inflow and an outflow of water that flows into or out of the hydraulic turbine in the generator room, the waterway is buried with soil, and road pavement is carried out. However, in the present invention, a bridge may be installed above the generator room by utilizing an auxiliary waterway wall body in the generator room as a leg of the bridge, such that economic feasibility is very high because there is no waterway passing through the existing reclaimed land, and construction costs may be significantly reduced because it is possible to install four or more auxiliary waterway wall bodies in the generator room with installation and construction costs for the single waterway passing through the reclaimed land.

Fourth, in the related art, a supply and drainage waterway is separately installed. However, in the present invention, the single hydraulic turbine waterway and the two auxiliary waterways are installed in the generator room together with the single generator in order to carry out multiple-flow power generation, and as a result, it is effective to further install the generator when an additional waterway is required without separately installing a supply and drainage waterway that requires a large amount of installation costs. That is, the power generation is carried out until the water level becomes 1.8 m, and as a result, when power generation is carried out by further installing two generators in a case in which the water height is 1.8 m to 2 m, the amount of remaining water is decreased, and the number of supply and drainage waterways serving as auxiliary waterways is increased to four, and as a result, the water may be naturally and sufficiently treated within one hour.

Fifth, the generator in the related art utilizes 30% to 40% of a water storage amount of water and drains the remaining 60% to 70% of water in order to improve power generation efficiency for each generator. However, in the present invention, multiple-flow power generation is carried out by the uniflow generator, and thus 70% to 80% of water is used to generate power, and only 20% to 30% of water is drained, and as a result, there is a significantly great effect.

That is, efficiency for each generator cannot be greater than efficiency when normal multiple-flow power generation is carried out, and as a result, when the generator capable of coping with the water storage amount in a maximum tidal range is installed, the amount of water to be drained is minimized, installation costs are required only for an additional generator, and the production amount of electric power is expected to be increased four times, such that economic feasibility is high.

Sixth, a waterway area, through which remaining and less accommodated water in the dam may be completely drained and less accommodated water may be fully accommodated like the natural state after power generation, may be sufficiently installed, and as a result, normal multiple-flow power generation may be carried out, no damage occurs to mudflats, and thus there is no damage to fishermen which is caused by damage to mudflats, and water is smoothly circulated in the dam, such that it is possible to prevent deterioration and contamination of water quality, minimize environmental damage, and increase electric power production several times, thereby activating the tidal power generation industry which is an industrial wasteland.

That is, in the case of the installation method in the related art, a supply and drainage waterway area is insufficient, such that damage to mudflats, damage to fishermen, and deterioration of water quality, which are all problems of damage, and normal multiple-flow power generation cannot be carried out, and as a result, the tidal power generation industry cannot be activated. However, in the case of the present method capable of multiple-flow power generation from an installation of a uniflow generator, the three waterways, which include the single hydraulic turbine waterway and the two auxiliary waterways serving as supply and drainage waterways, are installed to install the single generator, and as a result, the insufficiency of the waterway area, which causes various problems which are negative effects on the tidal power generation industry, is solved, thereby solving all of the problems caused by the multiple-flow generator having a high purchase price and the insufficient of the waterway area, and thus the tidal power generation industry will be carried out with an easy mind.

Seventh, the time required to open and close the sluice gate is about 1 m per one minute, that is, the time is long, such that the time becomes fifteen minutes when a waterway height is 15 m, and thus becomes a great part longer than one hour for which remaining and less accommodated water may be treated, and a height of the sluice gate is decreased to 5 m, such that a weight of the sluice gate is decreased by 1/3, and the sluice gate is adjusted to 14 m for one minute, and the sluice gate may be opened and closed within two minutes by an electronic control device so that only 1 m is opened within one minute. A speed of the sluice gate may be increased three to five or more times.

Eighth, construction costs are reduced because a leg height for a bridge installation and a crane installation height may be reduced, and a large amount of construction costs may be reduced because an installation length of a generator room may be shortened.

## Description of Drawings

FIG. 1 is a schematic top plan view of a construction method for a tidal power generation system capable of multiple-flow power generation from an installation of a uniflow generator according to an exemplary embodiment of the present invention.

FIG. 2 is an inner side view of a generator room illustrated in FIG. 1.

FIG. 3 is a front view of a construction method for a tidal power generation system capable of multiple-flow power generation from an installation of a uniflow generator according to another exemplary embodiment of the present invention.

FIG. 4 is a top plan view illustrating installation structures of a generator, a hydraulic turbine waterway, an auxiliary waterway, and a sluice gate in a generator room according to the construction method of the tidal power generation system capable of multiple-flow power generation from an installation of a uniflow generator as illustrated in FIG. 3.

FIG. 5 is a top plan view illustrating a construction method for a tidal power generation system capable of multiple-flow power generation from an installation of a uniflow generator according to still another exemplary embodiment of the present invention, in which a place with deep water or weak ground is dug deeply into a base rock layer, and multi-stage sluice gates and waterways are installed as lower layers of the hydraulic turbine waterway.

**Description of Reference Numerals**

1: Hydraulic turbine waterway wall body
2: Waterway and Sluice gate
3: Generator
4: Bracket
5: Hydraulic turbine
6: Column
7: Entry passageway
8: Sleeve
20: Auxiliary waterway wall body
21, 22, 23, 31, 32, 33: Sluice gate
100: Multiple-flow tidal power generation system
101: Hydraulic turbine waterway
102: Auxiliary waterway

**Detailed description of the embodiments**

Hereinafter, configurations and operations of exemplary embodiments of the present invention will be described with reference to the accompanying drawings. It should be noted that although the same constituent elements are illustrated in different drawings, the same constituent elements are referred to by the same reference numerals as possible.

In the following description of the present invention, the specific descriptions of publicly known related functions or configurations will be omitted when it is determined that the specific descriptions may unnecessarily obscure the subject matter of the present invention.

In addition, unless otherwise described, the word "comprise" and variations such as "comprises" or "comprising" will be understood to imply the inclusion of stated elements, not the exclusion of any other elements.

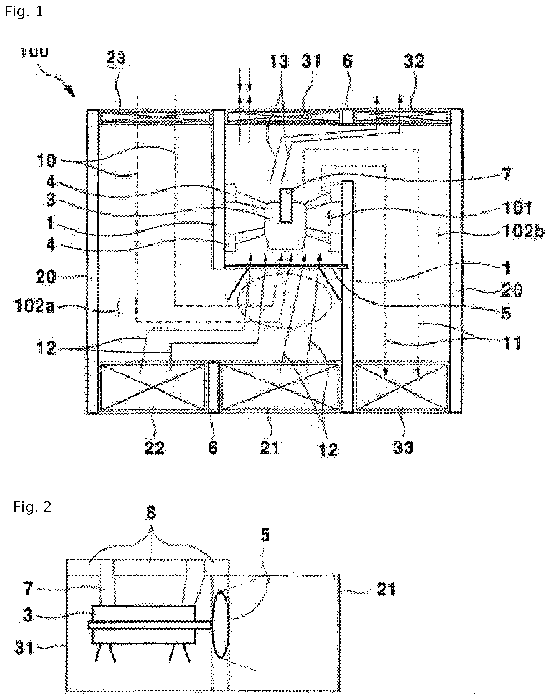

FIG. 1 is a schematic top plan view of a construction method for a tidal power generation system capable of multiple-flow power generation from an installation of a uniflow generator according to an exemplary embodiment of the present invention, and FIG. 2 is an inner side view of a generator room illustrated in FIG. 1.

FIG. 1 is a schematic top plan view illustrating a multiple-flow tidal power generation system 100 in which two auxiliary waterways 102a and 102b are continuously installed for a single generator 3 as the auxiliary waterways 102a and 102b are formed at both sides of a single generator hydraulic turbine waterway 101 one for each side, by installing auxiliary waterway wall bodies 20 at both sides of the generator hydraulic turbine waterway when installing a single layer generator room because water is not deep.

As illustrated in FIG. 1, the auxiliary waterway wall bodies 20 are installed at both sides of hydraulic turbine waterway wall bodies 1 so as to form the auxiliary waterways 102a and 102b, such that the auxiliary waterways 102a and 102b are connected to the existing hydraulic turbine waterway 101 so that water is introduced into the auxiliary waterway 102a in order to generate power, and a plurality of sluice gates 21, 22, 23, 31, 32, and 33 is configured, such that the auxiliary waterways 102a and 102b become a waterway for supplying power generation water and become a supply and drainage waterway after power generation.

Here, the sluice gate 21 is a sluice gate for power generation water of the existing generator hydraulic turbine, and the sluice gate 31 is a drain waterway sluice gate of the existing hydraulic turbine waterway.

In addition, the sluice gate 22 is a sluice gate for the supply and drainage waterway for auxiliary power generation water, the sluice gate 23 is a sluice gate for the supply and drainage waterway for auxiliary power generation water when the multiple-flow power generation is carried out in contrast, the sluice gate 32 is a sluice gate for the supply and drainage waterway serving as a drain waterway, and the sluice gate 33 is a sluice gate for the supply and drainage waterway serving as a drain waterway when the multiple-flow power generation is carried out in contrast. In this case, the waterway between the hydraulic turbine waterway wall body 1 and the hydraulic turbine waterway wall body 1 is a waterway having a high barrier, a bracket 4 for mounting the generator 3 is installed on the two hydraulic turbine waterway wall bodies 1 at an intermediate portion as the waterway having a higher barrier, the auxiliary waterway wall body 20 is connected, through a sleeve 8, to an intermediate portion of the auxiliary waterway between the auxiliary waterway wall body 20 and the hydraulic turbine waterway wall body 1 at a portion where the bracket 4 is installed, that is, the entire auxiliary waterways 102a and 102b at a side opposite to a side where the bracket 4 for fixedly installing the generator 3 is installed, thereby making a structure robust and reinforcing the multiple-flow tidal power generation system 100 so as to withstand a load of the generator 3.

In addition, as the auxiliary waterway wall bodies 20 are installed at both sides of one hydraulic turbine waterway wall body 1, the auxiliary waterways 102a and 102b are formed, such that water at the opposite side is introduced and passes through the hydraulic turbine 5 so as to carry out multiple-flow power generation when the sluice gate 23 is opened (see arrow 10), a drain waterway, through which the water used for the multiple-flow power generation is drained, is formed when the sluice gate 33 is opened (see arrow 11), and a supply and drainage waterway is formed when the sluice gates 22 and 23 of the auxiliary waterway 102a are opened in order to drain and accommodate remaining and less accommodated water after power generation.

In addition, a supply and drainage waterway is formed when the sluice gates 32 and 33 of the auxiliary waterway 102b are opened after power generation.

When the sluice gates 21 and 22 are opened, the sluice gates 31 and 33 are closed, and the sluice gate 32 is opened, forward direction power generation, in which water is introduced in a direction indicated by arrow (12), and used to generate power and the water used to generate power is drained in the direction indicated by arrow (13) through the sluice gate 32, is carried out. When the sluice gate 33 is closed and the sluice gates 31 and 32 are opened, primary uniflow power generation is carried out by two methods in which water is drained through the two sluice gates 31 and 32 in a direction indicated by arrow (13).

In addition, the power generation may be carried out by installing the generator in the opposite direction such that when the sluice gate 33 is primarily closed and the sluice gates 31 and 32 are opened, water is introduced and used to generate power, and the water used to generate power is drained through the sluice gates 21 and 22 when the sluice gates 21 and 22 are opened.

Secondary multiple-flow power generation is carried out by installing the auxiliary waterways 102a and 102b by auxiliary waterway wall bodies 20 for multiple-flow power generation at both sides of the hydraulic turbine waterway wall body 1 on which the existing uniflow generator 3 is installed, connecting the auxiliary waterways 102a and 102b with the existing hydraulic turbine waterway 1 so that water flows therebetween, and introducing water at the opposite side in a direction indicated by arrow (10) through the sluice gate 23. When the sluice gates 31 and 32 are closed, water is drained to the sluice gate 33 through the waterway in a direction indicated by arrow (11), and water at the opposite side to the uniflow generator is introduced and used to carry out normal multiple-flow power generation.

That is, when power generation is carried out by opening the sluice gates 21 and 22, the water used to generate power is drained through the sluice gates 31 and 32 when the forward direction power generation is carried out, and in contrast, water is drained to the sluice gate 33 when multiple-flow power generation is carried out by opening the sluice gate 23.

The sluice gate 31 may be opened simultaneously with the sluice gate 32, thereby draining water used to generate power.

The interior of the generator room is in a vacuum state and filled with water, and the entire water in the interior flows simultaneously, and as a result, hydraulic energy of the water used to generate power is dispersed as much as an area of the waterway, such that it is possible to prevent the water used to generate power from flowing upward to a water surface outside the waterway and to a water surface of the inland sea or the open sea, thereby efficiently producing electric power.

In particularly, since the auxiliary waterways 102a and 102b become a supply and drainage waterway after power generation, it is not necessary to separately install the supply and drainage waterway, such that construction costs are not separately incurred and only installation costs for the auxiliary waterways are required, and as a result, multiple-flow power generation may be carried out in a state in which the uniflow generator is installed, and thus economic feasibility is very high. Non-described reference numeral 6 indicates a column for supporting the sluice gate, and non-described reference numeral 7 indicates an entry passageway in the generator room.

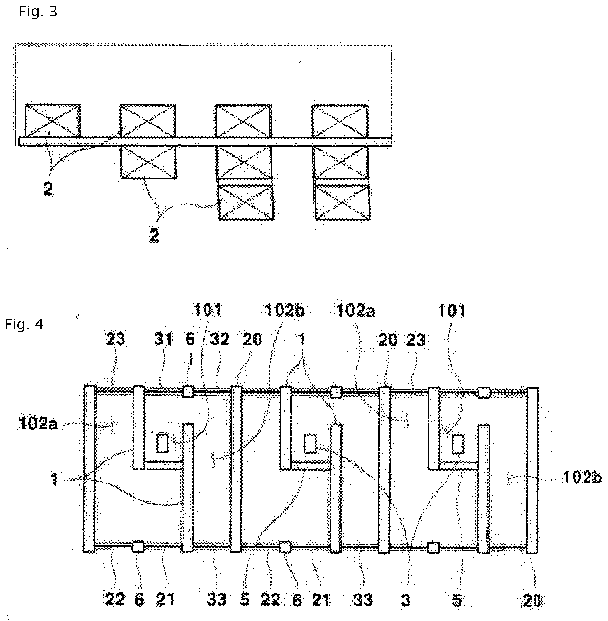

FIG. 3 is a schematic front view of a multiple-flow tidal power generation system according to another exemplary embodiment of the present invention, and FIG. 4 is a top plan view illustrating installation structures of a generator, a hydraulic turbine waterway, an auxiliary waterway, and a sluice gate in a generator room in a multiple-flow tidal power generation system as illustrated in FIG. 3.

As illustrated in FIGS. 3 and 4, a technology of installing a multi-stage weir-type waterway and a steplike sluice gate is applied, a place with weak ground below the generator room is dug deeply into a base rock layer, the hydraulic turbine waterway wall bodies 1 are installed uprightly, the auxiliary waterway wall bodies 20 are installed uprightly at both sides of the hydraulic turbine waterway wall body 1, and the waterway and the sluice gate 2 are installed in a steplike manner, and as a result, the interior of the generator room becomes a large space into which power generation water may flow, and a waterway between the waterway wall bodies 1 and 20 at the opposite side becomes a waterway of a space through which drain water may flow, such that it is possible to supply the amount of water sufficient to generate power and to sufficiently drain the water used to generate power.

In addition, since the supply and drainage waterway, through which remaining and less accommodated water may be drained and accommodated after power generation, is formed, a waterway area is sufficient, and a separate supply and drainage waterway need not be installed, such that additional construction costs are not incurred, and normal multiple-flow power generation may be carried out. In a case in which the generator room is installed at a place where a depth of water is 30 m, a waterway area is increased as a waterway height is increased, such that an area of an installation place of the generator room may be decreased. For example, a single-layer waterway, which has a width of 20 m and a height of 15 m so as to have an area of 300 m², has the same area as a two-layer waterway which has a width of 10 m and a height of 30 m so as to have an area of 300 m², but the installation length is decreased from 20 m to 0 m.

In addition, according to Korean Patent Application No. 10-2014-0055467 filed by the applicant, the ground is dug deeply into a base rock layer and the structure is installed, a waterway area may be 120% to 130% or more of the existing waterway area even though the structure is installed, such that reinforcing piling, sheet piling, and erosion prevention work need not be carried out, and a length of a cofferdam may be reduced, and as a result, it is possible to reduce construction costs, and economic feasibility is more improved by applying the structure when installing the generator room.

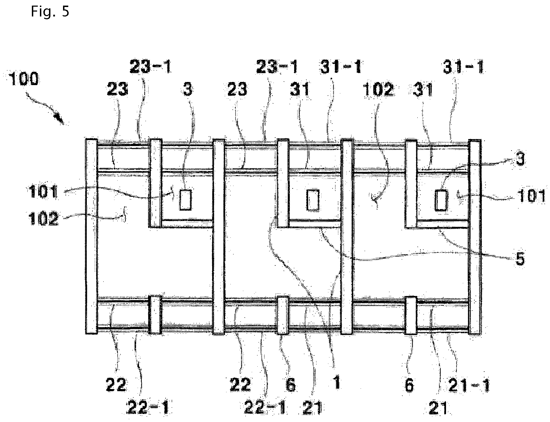

FIG. 5 is a top plan view illustrating a multiple-flow tidal power generation system according to still another exemplary embodiment of the present invention.

As illustrated in FIG. 5, with a method of installing a multi-stage waterway in a steplike manner at a place where water is deep, a single multi-stage hydraulic turbine waterway 101 and a single multi-stage auxiliary waterway 102a are continuously installed in the generator room.

In a state in which the auxiliary waterway wall body 20 illustrated in FIG. 1 is not installed and the single multi-stage hydraulic turbine waterway 101 is installed, the multi-stage hydraulic turbine waterway 101 is installed to be spaced apart from one side of the hydraulic turbine waterway at an auxiliary waterway width interval that may become the auxiliary waterway 102a, and the single multi-stage auxiliary waterway 102a and the single multi-stage hydraulic turbine waterway 101 are continuously installed.

In this case, a sluice gate is provided at each stage of the waterways 101 and 102a, and water at upper and lower stages of the waterways 101 and 102a communicates with each other through the sluice gates.

In FIG. 5, the sluice gates 21, 22, 23, and 31 are sluice gates of an upper layer, and the sluice gates 21-1, 22-1, 23-1, and 31-1 are sluice gates of a lower layer.

With the aforementioned configuration, water is introduced from the sea by opening the sluice gates 23 and 23-1, the generator 3 is operated to generate power as the water passes through the hydraulic turbine 5, and the water used to generate power is drained to a reservoir by opening the sluice gate 21-1 at the lower layer, such that the auxiliary waterway wall body 20 illustrated in FIG. 1 is reduced, and the installation length of the generator room is reduced by 1/3, and as a result, it is possible to greatly reduce construction costs and carry out secondary normal multiple-flow power generation.

**Best Mode**

First, when comparing a dam, which would be constructed by applying the present technology, with the existing installation method, it can be considered that a large amount of construction costs will be incurred if a number of supply and drainage waterways 102a and 102b serving as auxiliary waterways are installed in comparison with the existing construction costs, but a large amount of construction costs are not incurred.

In the existing installation method, a tunnel waterway, which is connected to a hydraulic turbine waterway in a generator room and passes through a reclaimed land, is not installed, and as a result, the existing civil construction costs are sufficient. As an example, in the Gangwha tidal power station as a preparation field for tidal power generation in Korean, a water storage area is 36.9 km², fourteen generators having a height in a tidal range of 9 m are installed, twenty waterway, which include fourteen tunnel waterways passing through a reclaimed land in a hydraulic turbine waterway and six supply and drainage waterways, are installed to have a width of 20 m, a height of 15 m, and a length of 44 m with erosion prevention concrete of 30 m, and 40% of water is used to generate power. According to the development, the existing tunnel waterway passing through a reclaimed land is not installed, and water used to generate power flows from the generator room directly toward the sea and the reservoir. Therefore, with construction costs for installing the single existing tunnel waterway, a single auxiliary waterway wall body 20 and a one-third hydraulic turbine waterway wall body 1 may be installed and two auxiliary waterways 102a and 102b may be installed as illustrated in FIG. 1, or two auxiliary waterway wall bodies 20 and a two-third hydraulic turbine waterway wall body 1 may be installed and four auxiliary waterways, which include two auxiliary waterways 102a and two auxiliary waterways 102b, may be installed, such that the construction costs are sufficient. When 80% of water is used, twenty-eight generators are installed, and thus fifty-six supply and drainage waterways serving as auxiliary waterways are installed, such that the number of supply and drainage waterways is greater, by 50, than the number of existing supply and drainage waterway which is six, and as a result, a waterway area is sufficient, and additional construction costs are not incurred. The remaining construction costs corresponding to the six existing supply and drainage waterway are used as construction costs for a cofferdam that increases the installation length of the generator room, and as a result, additional civil construction costs are not incurred.

Second, power generation may be carried out for 4.5 hours, and remaining and less accommodated water having a height of 1.8 m may be completely drained naturally and fully accommodated naturally within one hour including time of stand of tide, thirty minutes, and as a result, it is possible to perfectly prevent a reduction in mudflats, damage to fishermen caused by the reduction in mudflats, and deterioration of water quality, and to carry out normal multiple-flow power generation. The tidal power generation is typically carried out when a head drop for enabling power generation is 1.8 m or higher, and when the head drop is decreased to 1.8 m, power generation is stopped, and remaining and less accommodated water is drained and accommodated. When power generation is carried out with 80% of water having a height in a tidal range of 9 m, a water height of 20% of remaining water is 1.8 m when a height in a tidal range is 9 m. Because the water is stored at a height of 1.8 m at one side after power generation, the time required to naturally treat remaining and less accommodated water may be calculated by calculating a flow velocity by applying a formula regarding natural fall of water.

The Gangwha tidal power station uses 40% of water by using fourteen uniflow generators and six supply and drainage waterways in the related art in a state in which a water storage area is 36.9 km$^2$, and a height in a tidal range is 9 m.

The fourteen uniflow generators and the six supply and drainage waterways use 40% of water in the related art, but in the developed method, twenty-eight generators and fifty-six supply and drainage waterways serving as auxiliary waterways are installed and use 80% of water and 20% of water remains and is less accommodated, and the water is treated by the fifty-six waterways having a waterway width of 20 m and a height of 15 m.

amount of remaining water of 1.8 m: water storage area 36,900,000 m$^2$ × height of 1.8 m of remaining water = amount of remaining water 66,420,000 t

Here, a flow velocity of naturally falling water having a water height of 1.8 m is calculated by

$$9.8 \times 2 \times 1 \times 1.8 \text{ m} = \sqrt{35.28} = 5.939 \text{ m/s}$$, and because a flow velocity is decreased as water is drained, an average flow velocity, which is a half value, is calculated to 2.9698 m.

Here, because the average flow velocity is $9.8 \times 2 \times 1 \times 0.45 \text{ m} = \sqrt{8.82} = 2.9698$ m, an average water height when water is drained is 0.45 m when applying the average flow velocity.

When calculating the amount of water which may be drained and accommodated for one minute, the amount of water, which may be treated for one minute, is 20 m (waterway width) × 15 m (waterway height) × 56 (number of waterways) × 2.9698 m/s (average flow velocity) × 60 seconds = 2,993,558 t, such that the amount of water, which may be treated for one minute, is calculated. Here, a water storage amount is 66,420,000 t ÷ 2,993,558 t = 22.187 when a height of remaining water is 1.8 m, such that water may be naturally and completely drained and fully accommodated, and there is some time of thirty-eight minutes when remaining and less accommodated water is drained and accommodated after power generation (the water, which is drained to the twenty-eight hydraulic turbine waterways, is not calculated), and as a result, the water may be naturally treated for one hour. In a case in which rating power generation cannot be actually carried out and a large amount of water remains even though the number of generators is set by calculating water for enabling rating power generation, and in a case in which a water height is 1.8 m or higher even though power generation is carried out by extending power generation time by thirty-eight minutes, two generators are further installed for example, and power generation is carried out, such that the amount of remaining water is decreased, and since the number of supply and drainage waterways serving as auxiliary waterways 102a and 102b is increased to four, the water may be naturally and sufficiently treated, and as a result, it is possible to perfectly prevent damage to mudflats and deterioration of water quality, minimize damage to fishermen, and enables normal multiple-flow power generation. The number of generators may be adjusted to be increased or decreased so as to solve all of the problems that hinder tidal power generation.

Third, it can be considered that power generation efficiency may deteriorate when water used to generate power is drained from the generator room directly to the sea, but the power generation efficiency does not absolutely deteriorate.

In the existing generator installation method, the hydraulic turbine waterway wall bodies are spaced apart from each other at one point and continuously installed, and waviness is formed on a bottom of the waterway passing through a reclaimed land in order to change a flow of water and thus improve efficiency, but it is considered that efficiency will greatly deteriorate in comparison with efficiency of a case in which the generator and the hydraulic turbine are manufactured and simulated. In addition, when ten generators are installed and all of the ten generators are operated, efficiency deteriorates, but when only one generator among the ten generators is operated, efficiency is equal to efficiency obtained when the generator and the hydraulic turbine are manufactured and simulated.

Because a flow velocity is high when water used to generate power is drained to the sea, the water flows upward a water surface by energy of water flowing when the water comes into contact with the sea water. In this case, when a height of the water flowing upward to the water surface is 0.5 m and a head drop of water for rating power generation is 4.8 m, efficiency deteriorates as much as a height of 0.5 m. That is, power generation is carried out with water having a head drop of 4.8 m, but a height of 0.5 m is lost, such that efficiency is obtained as power generation is carried out with a head drop of 4.3 m. In the existing generator installation, since the hydraulic turbine waterway wall bodies 1 are continuously installed in a single space, water cannot be quickly spread out laterally when the water is drained, and the water flows upward the water surface, such that efficiency deteriorates. However, in the present invention, since the two supply and drainage waterways 102a serving as auxiliary waterways and the two supply and drainage waterways 102b serving as auxiliary waterways are continuously installed to be spaced apart from each other when installing the single generator, a space in which water may spread out laterally is large, energy is quickly dispersed, and the amount of water flowing upward the seawater surface is small, and as a result, efficiency is higher than that in the related art, and there is no difference in efficiency between a number one generator and a number twenty generator.

Efficiency will be low when the number of installed generators is 20 than when the number of installed generators is 10.

When the ten generators are installed, the number one generator and the number ten generator may have the highest efficiency, and the number five generator and the number six generator may have the lowest efficiency. Because the number one generator and the number ten generator have the spaces where water may be quickly spread out laterally, a height of draining water is quickly decreased, and efficiency is high as much as the decrease in height, and because the number five generator and the number six generator are fitted in the middle and thus water is slowly spread out laterally, efficiency is low. The same reason applies to explain the fact that average efficiency is low when the twenty generators are installed than when the ten generators are installed. Power generation efficiency is higher when the generator is installed at a place where water is deep than when the generator is installed at a place where water is shallow, because water is quickly spread out when the water is deep.

While the technical spirit of the present invention has been described with reference to the accompanying drawings, the exemplary embodiment of the present invention has been illustratively described, and is not intended to limit the present invention. In addition, it is apparent that various modifications and imitations may be implemented by those skilled in the art without departing from the scope of the invention which is defined by the appended claims.

## Industrial Applicability

The present invention does not use the multiple-flow generator which has a purchase price higher by 50% or more than that of the uniflow generator, has a problem in that the hydraulic turbine blade breaks down due to a change in direction, and has a problem caused by power generation using a reverse flow. The present invention has been developed because there is an effect identical to an effect achieved when two uniflow generators are installed at both sides in the hydraulic turbine waterway, there are many economic effects, there is no problem with breakdown, and it is convenient to use because power generation is carried out only by opening and closing the sluice gate.

The present invention completely solve the problems with tidal power generation in that mudflats are reduced, fishermen are damaged, water quality deteriorates because water is not smoothly circulated, power generation ends due to a reason that inhibits normal multiple-flow power generation, remaining and less accommodated water cannot be naturally treated, and a waterway area is insufficient.

The present invention has been developed to quickly open and close the sluice gate in order to solve the problem in that time required to open and close the sluice gate is long and the time required to treat remaining and less accommodated water is shortened. The present invention solves all of the problems, which were obstructive factors against tidal power generation industries, and carries out normal multiple-flow power generation, and as a result, it is possible to increase the amount of generated electric power, minimize damage to environments and fishermen, reduce an electric power shortage, and reduce a large amount of carbon emission caused by thermal power generation, and as a result, clean energy industries for inhibiting warming of the earth will be activated.

## Claims

1. A tidal power generation system capable of multiple-flow power generation from an installation of a uniflow generator, the system comprising:

   a hydraulic turbine waterway (101) which has therein a generator (3) and a hydraulic turbine (5), and is formed by forming hydraulic turbine waterway wall bodies (1) at both sides thereof;
   auxiliary waterways (102a, 102b) which are formed by forming auxiliary waterway wall bodies (20) at both sides of the hydraulic turbine waterway wall bodies (1) so as to be spaced apart from the waterway wall bodies, and connected to the hydraulic turbine waterway (101) so that water flows therebetween; and
   a plurality of sluice gates (21, 22, 23, 31, 32, 33) at which three waterways, which include the single hydraulic turbine waterway (101) and two auxiliary waterways (102a, 102b), are provided, and are opened and closed to introduce and drain water for rectification and multiple-flow power generation,
wherein the hydraulic turbine waterway (101) and the auxiliary waterway (102a, 102b) are vertically installed, the hydraulic turbine waterway (101) and the auxiliary waterway (102a, 102b) vertically communicate with each other, the three waterways, which include the single hydraulic turbine waterway (101) and the two auxiliary waterways (102a, 102b), are installed for each generator (3), and each auxiliary waterway (102a, 102b) separately includes a supply and drainage waterway function.

2. The tidal power generation system of claim 1, wherein the sluice gate (21, 22, 23, 31, 32, 33) is divided into three stages and configured to have a steplike shape so as to disperse a weight of the sluice gate and increase a speed of the sluice gate.

**Patentansprüche**

1. Gezeitenkraftwerk, das in der Lage ist, aus einer Installation eines Einstromgenerators Mehrstromenergie zu erzeugen, wobei das System Folgendes umfasst:

einen hydraulischen Turbinen-Wasserweg (101), in dem sich ein Generator (3) und eine hydraulische Turbine (5) befinden und der durch Ausbilden von hydraulischen Turbinen-Wasserweg-Wandkörpern (1) an seinen beiden Seiten gebildet wird;
Hilfswasserwege (102a, 102b), die durch Ausbilden von Hilfswasserweg-Wandkörpern (20) an beiden Seiten der Wasserturbinen-Wasserweg-Wandkörper (1) ausgebildet sind, so dass sie von den Wasserweg-Wandkörpern beabstandet sind, und die mit dem hydraulischen Turbinen-Wasserweg (101) verbunden sind, so dass Wasser dazwischen fließt; und
eine Vielzahl von Schleusentoren (21, 22, 23, 31, 32, 33), an denen drei Wasserwege, die den einzelnen Wasserturbinen-Wasserweg (101) und zwei Hilfswasserwege (102a, 102b) umfassen, vorgesehen sind und die geöffnet und geschlossen werden, um Wasser zur Rektifikation und zur Mehrstrom-Energieerzeugung einzuleiten und abzuleiten,
wobei der hydraulischen Turbinen-Wasserweg (101) und der Hilfswasserweg (102a, 102b) vertikal installiert sind, der hydraulischen Turbinen-Wasserweg (101) und der Hilfswasserweg (102a, 102b) vertikal miteinander in Verbindung stehen, die drei Wasserwege, die den einzelnen Hydraulikturbinen-Wasserweg (101) und die zwei Hilfswasserwege (102a, 102b) umfassen, für jeden Generator (3) installiert sind und jeder Hilfswasserweg (102a, 102b) separat eine Versorgungs- und Abflusswasserwegfunktion umfasst.

2. Gezeitenkraftwerk nach Anspruch 1, wobei das Schleusentor (21, 22, 23, 31, 32, 33) in drei Stufen unterteilt und so konfiguriert ist, dass es eine stufenartige Form aufweist, um ein Gewicht des Schleusentors zu verteilen und eine Geschwindigkeit des Schleusentors zu erhöhen.

**Revendications**

1. Système de production d'énergie marémotrice capable de produire de l'énergie à flux multiples à partir d'une installation d'un générateur à flux unique, le système comprenant:

une voie d'eau de turbine hydraulique (101) qui contient un générateur (3) et une turbine hydraulique (5), et qui est formée en formant des corps de paroi de voie d'eau de turbine hydraulique (1) sur ses deux côtés;
des voies d'eau auxiliaires (102a, 102b) qui sont formées en formant des corps de paroi de voie d'eau auxiliaire (20) des deux côtés des corps de paroi de voie d'eau de turbine hydraulique (1) de manière à être espacées des corps de paroi de voie d'eau, et reliées à la voie d'eau de turbine hydraulique (101) de sorte que l'eau s'écoule entre elles; et
une pluralité de vannes (21, 22, 23, 31, 32, 33) au niveau desquelles trois voies d'eau, qui comprennent la voie d'eau unique de la turbine hydraulique (101) et deux voies d'eau auxiliaires (102a, 102b), sont prévues, et sont ouvertes et fermées pour introduire et évacuer l'eau pour la rectification et la production d'énergie à flux multiples, dans lequel la voie d'eau de turbine hydraulique (101) et la voie d'eau auxiliaire (102a, 102b) sont installées verticalement, la voie d'eau de turbine hydraulique (101) et la voie d'eau auxiliaire (102a, 102b) communiquent verticalement l'une avec l'autre, les trois voies d'eau, qui comprennent la voie d'eau de turbine hydraulique unique (101) et les deux voies d'eau auxiliaires (102a, 102b), sont installées pour chaque générateur (3), et chaque voie d'eau auxiliaire (102a, 102b) comprend séparément une fonction de voie d'eau d'alimentation et de drainage.

2.  Système de production d'énergie marémotrice selon la revendication 1, dans lequel la porte de sas (21, 22, 23, 31, 32, 33) est divisée en trois étages et configurée pour avoir une forme en escalier de manière à disperser un poids de la porte de sas et à augmenter une vitesse de la porte de sas.

Fig. 1

Fig. 2

Fig. 3

Fig. 4

Fig. 5

**EP 3 299 521 B1**

**Patent documents cited in the description**

- KR 1020100004089
- KR 100723639 B1
- KR 1020140055467